(19) **Europäisches Patentamt / European Patent Office / Office européen des brevets**

(11) **EP 1 012 985 B1**

(12) **EUROPEAN PATENT SPECIFICATION**

(45) Date of publication and mention
of the grant of the patent:
**01.04.2009 Bulletin 2009/14**

(21) Application number: **98944318.9**

(22) Date of filing: **10.09.1998**

(51) Int Cl.:
**H04L 1/04** (2006.01)

(86) International application number:
**PCT/KR1998/000276**

(87) International publication number:
**WO 1999/013585 (18.03.1999 Gazette 1999/11)**

(54) **DEVICE AND METHOD FOR DATA ENCODING AND FREQUENCY DIVERSITY IN MOBILE COMMUNICATIONS SYSTEM**

VORRICHTUNG UND VERFAHREN ZUR DATENKODIERUNG UND FREQUENZDIVERSITY IN EINEM MOBILEN KOMMUNIKATIONSSYSTEM

DISPOSITIF ET PROCEDE DE CODAGE DE DONNEES ET DIVERSITE DE FREQUENCES DANS UN SYSTEME DE COMMUNICATIONS MOBILE

(84) Designated Contracting States:
**DE FR GB IT SE**

(30) Priority: **11.09.1997 KR 9746711**

(43) Date of publication of application:
**28.06.2000 Bulletin 2000/26**

(73) Proprietor: **SAMSUNG ELECTRONICS CO., LTD.
Suwon City, Kyounggi-Do 441-370 (KR)**

(72) Inventors:
  • **LEE, Kwang, Wook
    Seoul 135-110 (KR)**
  • **KIM, Young, Ky
    Seoul 135-280 (KR)**
  • **AHN, Jae, Min
    Kangnam-gu
    Seoul 135-239 (KR)**
  • **YOON, Soon, Young
    Seoul 138-160 (KR)**

  • **KANG, Hee, Won
    Seoul 131-207 (KR)**
  • **KONG, Seung, Hyun
    Seoul 135-210 (KR)**
  • **CHUNG, Ha, Bong
    Kwachon-shi
    Kyonggi-do 427-050 (KR)**
  • **NO, Jong, Seon
    Kyonggi-do 463-060 (KR)**
  • **YANG, Kyeong, Cheol
    Seoul 150-010 (KR)**

(74) Representative: **Grünecker, Kinkeldey,
Stockmair & Schwanhäusser
Anwaltssozietät
Leopoldstrasse 4
80802 München (DE)**

(56) References cited:
  **EP-A2- 0 544 463          GB-A- 2 305 582
  US-A- 5 196 848          US-A- 5 469 162**

EP 1 012 985 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a transmitter and a data transmitting method in a mobile communications system, and in particular, to a device and method for encoding transmission data and achieving frequency diversity.

Voice or data is subject to channel encoding for radio transmission and reception in a mobile communications system. On a forward link, for example, voice or data to be transmitted is channel-encoded and modulated in such a method as QPSK (Quadrature Phase Shift Keying). Channel encoding is generally performed for data transmission in a single frequency, and encoded symbols are BPSK (Binary Phase Shift Keying)/QPSK modulated prior to transmission.

However, if a plurality of frequencies and phase channels are available to a user for high-speed data transmission, there is a need for assigning transmission data symbols to the plurality of channels.

Conventionally, data symbols are distributed to a plurality of channels for transmission. This method advantageously enables transmission of data as much as the capacity of the channels permits, but has limitations in recovering data against possible failures in channels or transmission data loss. The lost data may be recovered by reinforcing data encoding, but with a decrease in transmission efficiency on multiple channels.

Furthermore, when a channel is or remains defective, the channel is not used or less frequently used until it is recovered, in the prior art. Therefore, communication service quality becomes poor beyond remedy.

The above problems are solved by transmitting the same data on a plurality of frequencies and phase channels. Despite possible failures in some of channels, the data transmitted on the other channels are safe, thereby allowing a reliable communication link to be constructed. Yet, this method remarkably decreases channel use efficiency.

Because channel encoding and assignment of frequencies and phase channels are independently performed in the conventional technology, it is impossible to consider channel use efficiency in data encoding.

In EP 0 544 463, information is transmitted in digital form over fading channels using DPSK coded modulation incorporating multi-level coding in order to provide unequal error protection for different classes of data.

It is the object of the present invention to provide and use code sets for data transmission in a mobile communications system in consideration of channel use efficiency, characteristics of a plurality of frequencies and phase channels, and in consideration of the distance between the code words in the code sets.

The object is solved by the subject matter of the independent claims.
Preferred embodiments of the present invention are defined by the dependent claims.

An aspect of the present invention is to provide a device and method for converting channel-encoded symbols to code words in consideration of channel use efficiency and characteristics of a plurality of frequencies and phase channels and transmitting the code words via a plurality of channels in a mobile communications system.

Another aspect of the present invention is to provide a device and method for detecting a code set with a desired minimum distance between code words in order to convert transmission data to code words in a mobile communications system.

Still another aspect of the present invention is to provide a device and method for selecting the best code set from a plurality of detected code sets in a mobile communications system and transmitting the selected code set

**BRIEF DESCRIPTION OF THE DRAWINGS**

The above aspects and advantages of the present invention will become more apparent by describing in detail preferred embodiment thereof with reference to the attached drawings in which:

FIG. 1 is a block diagram of a transmitter on a forward link in a mobile communications system;
FIG. 2 is a block diagram of a waveform modulator shown in FIG. 1;
FIG. 3 is a block diagram of the waveform modulator constituted of logic circuits according to an embodiment of the present invention; and
FIGs. 4 and 5 are views showing memories used for the waveform modulator according to the embodiment of the present invention.

**DETAILED DESCRIPTION OF THE PREFERRED EMBODIMENT**

The present invention is intended to offer data encoding and frequency diversity for a digital mobile communications system such as a CDMA (Code Division Multiple Access) cellular system or PCS (Personal Communications System). That is, a mobile communications system using channel encoding and multicarrier transmission is designed to enable effective information transmission and reception by efficiently assigning data and code symbols to available frequencies and phase resources in a communication environment in which channels are susceptible to errors due to fading, in an embodiment of the present invention.

A transmitter in a mobile communications system according to the embodiment of the present invention has an algorithm of detecting a code set under given conditions.

First, how to construct codewords according to a given number of frequencies and phase channels will be described. If the numbers of the given frequency channels and phase channels are Nf and Np, and requirements for frequency- and phase-multiplexing transmission data are Mf and Mp, the number of available channels is (NfxNp). This implies that a maximum code length Nc is (NfxNp). Then, for dmin (a minimum distance between codewords) = Nd, a code set satisfying the following conditions is detected.

The number of codewords depending on the number of phase channels is $2^{Np}$. When Np=2 in QPSK, the four codewords can be obtained: {00, 01, 10, 11} = {a, b, c, d}.

The number of codewords depending on frequency diversity is $2^{Nf}$. For Nf=3, eight codewords can be generated.

If the phase channels and frequency channels are operative together, the length of a codeword is (NfxNp) and $2^{NfxNp}$ codewords can be generated in a code set. For Nf = 3 and Np=2, a code set includes 64 codewords. Use of the code set having dmin of 2 to reduce demodulation errors in a receiver increases the reliability of codeword modulation/ demodulation, virtually bringing about channel encoding effects. The size (the number of codewords) of the code set with dmin of 2 is $2^{NfxNp}/2$. Hence, $2^{NfxNp}/Nd$ codewords are available in modulation with a code set having dmin=Nd. From $2^N = 2^{NfxNp}/2$, the channel encoding efficiency at a demodulator is $N/\{(NfxNp)/Nd\}$.

There will be shown examples of code sets constructed to satisfy the above conditions.

1. Three Frequencies

1-1. Nf=3, Np=2 (I and Q), dmin=2, and frequency diversity $\geq$ 2

The length of a codeword is 6 bits (=NfxNp) and the four codewords are available for the two phase channels per frequency: {00, 01, 10, 11} = {a, b, c, d}.

Then, codewords for the three frequencies can be designed as follows:

Codewords starting with a are
aaa = {00 00 00}
abb = (00 01 01}
acc = {00 10 10}
add = {00 11 11}

Codewords starting with b are obtained by fixing the second symbols in the order of a, b, c, d, and permuting the third symbols in an order different from the order of the third symbols in the codewords starting with a. Here, the number of the third symbol arrangements is equal to a total number of permutations minus the permutation corresponding to the third symbol arrangement in the codewords starting with a.

baX = {01 00 xx}
bbX = {01 01 xx}
bcX = {01 10 xx}
bdX = {01 11 xx}

Similarly, codewords starting with c are produced by fixing the second symbols in the order of a, b, c, d, and permuting the third symbols in a different manner from the orders of arranging the third symbols in the codewords starting with a and b.

caX = {10 00 xx}
cbX = {10 01 xx}
ccX = {10 10 xx}
cdX = {10 11 xx}

Codewords starting with d can be generated in the same manner.

daX = {11 00 xx}
dbX = {11 01 xx}
dcX = {11 10 xx}
ddX = {11 11 xx}

Therefore, a plurality of code sets can be made. For example, a code set can be

```
aaa = {00 00 00}
abb = {00 01 01}
acc = {00 10 10}
add = {00 11 11}
bab = {01 00 01}
bbc = {01 01 10}
bcd = {01 10 11}
bda = {01 11 00}
cac = {10 00 10}
cbd = {10 01 11}
cca = {10 10 00}
cdb = {10 11 01}
dad = {11 00 11}
dba = {11 01 00}
dcb = {11 10 01}
ddc = {11 11 10}
```

It is most effective to apply an optimum code set taken from the code sets resulted from the above procedure to a mobile communications system, and the effectiveness criterion is Hamming distance distribution among codewords. That is, the optimum code set shows a Hamming distance distribution which minimizes demodulation errors.

1-2. Nfd=3, Np=2 (I and Q), dmin=3, and frequency diversity = 3

The length of a codeword is 6 bits (=NfxNp) and the four codewords are available for the two phase channels per frequency: {00, 01, 10, 11} = {a, b, c, d}.

Then, codewords for the three frequencies can be designed as follows. If a codeword starts with a, any other code in a code set does not start with a. This rule is applied to the second and third symbols.

```
aaa = {00 00 00}
bbb = {01 01 01}
ccc = {10 10 10}
ddd = {11 11 11}
```

A plurality of code sets can be derived from the above code set by permutation.

```
aXX = {00 xx xx}
bXX = {01 xx xx}
cXX = {10 xx xx}
dXX = {11 xx xx}
```

The second and third symbols can be produced by permuting the order of a, b, c, d.

A different example of code set is

```
abc = {00 01 10}
bcd = {01 10 11}
cda = {10 11 00}
dab = {11 00 01}
```

1-3. Nf=3, Np=2, and dmin=3

For frequency diversity = 2, a code set size is 4 and given as

```
aaa = {00 00 00}
adb = {00 11 01}
dda = {11 11 00}
dab = {11 00 01}
```

For frequency diversity ≥ 2, a code set size is 8 and six code sets can be produced.

Code Set # 1

aaa = {00 00 10}
adb = {00 11 01}
bdc = {01 11 10}
bad = {01 00 11}
cbc = {10 01 10}
ccd = {10 10 11}
dbb = {11 01 01}
dca = {11 10 00}

Code Set #2

aaa = {00 00 00}
adb = (00 11 01}
bdc = {01 11 10}
bad = {01 00 11}
cbd = {10 01 11}
ccc = {10 10 10}
dba = {11 01 00}
dcb = {11 10 01}

Code Set #3

aaa = {00 00 00}
adb = {00 11 01}
bbc = {01 01 10}
bed = {01 10 11}
cad = {10 00 11}
cdc = {10 11 10}
dbb = {11 01 01}
dca = {11 10 00}

Code Set #4

aaa = {00 00 00}
ado = {00 11 01}
bbc = {01 01 10}
bed = {01 10 11}
cbd = {10 01 11}
ccc = {10 10 10}
dab = {11 00 01}
dda = {11 11 00}

Code Set #5

aaa = {00 00 00}
adb = {00 11 01}
bbd = {01 01 11}
bcc = {01 10 10}
cad = {10 00 11}
cdc = {10 11 10}
dba = {11 01 00}
dcb = {11 10 01}

Code Set #6

aaa = {00 00 00}

adb = {00 11 01}
bbd = {01 01 11}
bcc = {01 10 10}
cbc = {10 01 10}
ccd = {10 10 11}
dab = {11 00 01}
dda = {11 11 00}

## 2. Six Frequencies

The number of available frequencies is not limited to three and can be six on a multicarrier forward link. Thus, code sets for six frequencies can be designed in consideration of frequency diversity, as follows.

{a, b, cd, } = {00, 01, 10, 11} is also used in building code sets for six frequencies.

## 2-1. Frequency diversity exists, and dmin=2

A total number of codewords is $4^5$. A codeword is expressed as e1 e2 e3 e4 e5 e6 and e4 e5 e6 are determined from e1 e2 e3. Then, the following three-frequency sets are made.

$$SA = \left\{ \begin{array}{llll} aaa & bab & cac & dad \\ abb & bbc & cbd & dba \\ acc & bcd & cca & dcb \\ add & bda & cdb & ddc \end{array} \right\}$$

$$SB = \left\{ \begin{array}{llll} aba & bbb & cbc & dbd \\ acb & bcc & ccd & dca \\ adc & bdd & cda & ddb \\ aad & baa & cab & dac \end{array} \right\}$$

$$SC = \left\{ \begin{array}{llll} aca & bcb & ccc & dcd \\ adb & bdc & cdd & dda \\ aac & bad & caa & dab \\ abd & bba & cbb & dbc \end{array} \right\}$$

$$SD = \left\{ \begin{array}{llll} a\,d\,a & b\,d\,b & c\,d\,c & d\,d\,d \\ a\,a\,b & b\,a\,c & c\,a\,d & d\,a\,a \\ a\,b\,c & b\,b\,d & c\,b\,a & d\,b\,b \\ a\,c\,d & b\,c\,a & c\,c\,b & d\,c\,c \end{array} \right\}$$

If the first three symbols of e1 e2 e3 e4 e5 e6 belong to SA, the last three symbols are selected from SA. A code set size is $4^5$ when codewords are generated in this manner.

2-2. Frequency diversity=6

Since a codeword has different code symbols in every symbol position, a code set size is 4. To maximize the distance between codewords, symbol distance should be considered. For the four codewords, a codeword distance is six symbols and 01, 10, 11 occur twice respectively regardless of symbol positions in the six symbols. Since four of the six symbols have weight 1s and the other two symbols have weight 2s, the six symbols are composed of four symbols having weight 1s and two symbols having weight 2s to maximize the codeword distance. That is,

$$c1 + c2 => \{01\ 01\ 10\ 10\ 11\ 11\}$$

$$c2 + c3 => \{10\ 10\ 11\ 11\ 01\ 01\}$$

$$c1 + c3 => \{11\ 11\ 01\ 01\ 10\ 10\}$$

$$c1 + c4 => \{10\ 10\ 11\ 11\ 01\ 01\}$$

$$c2 + c4 => \{11\ 11\ 01\ 01\ 10\ 10\}$$

$$c3 + c4 => \{01\ 01\ 10\ 10\ 11\ 11\}$$

For example, when c1 = 00 00 00 00 00 00, the code set is

c1 = 00 00 00 00 00 00
c2 = 01 01 10 10 11 11
c3 = 11 11 01 01 10 10
c4 = 10 10 11 110101

where the code set size is 4 and dmin=8.

2-3. Frequency diversity $\geq 5$

A total of 12 bits are grouped into 4 bits. That is, if symbols are a0, a1, a2, ..., a15, each symbol of a codeword (ai aj ak) is different from any other symbol in view of the given frequency diversity.

Though a code size is 16, it cannot be said that the frequency diversity $\geq 5$ with all codewords each having different symbols. Therefore, an actual code set size is 8 and a code set is

```
a a a a a a
a b b b b b
b a c c c c
b b d d d d
c c a b c d
c d b c d a
d c c d a b
d d d a b c
```

2-4. Frequency diversity $\geq 4$

The first three symbols in a codeword are different, and the number of codewords in a code set is smaller than $4^3$. A code set having 32 $(=2\times 4^2)$ codewords is constructed in the following procedure.
First, 16 codewords are generated by SA+SA, that is, repeating the 16 codewords in SA once.

```
a a a a a a
b a b b a b
c a c c a c
d a d d a d

a b b a b b
b b c b b c
c b d c b d
d b a db a

a c c a c c
b c d b c d
c c a c c a
d c b d c b

a d d a d d
b d a b d a
c d b c d b
d d c d d c
```

Then, the other 16 codewords are generated by SB+SB*. SB* is achieved by changing the order of symbols in SB.

$$
SB* = \left\{
\begin{array}{cccc}
c\,c\,d & d\,c\,a & a\,c\,b & b\,c\,c \\
c\,d\,a & d\,d\,b & a\,d\,c & b\,d\,d \\
c\,a\,b & d\,a\,c & a\,a\,d & b\,a\,a \\
c\,b\,c & d\,b\,d & a\,b\,a & b\,b\,b
\end{array}
\right\}
$$

The other 16 codewords are

```
a b a c c d
b b b d c a
c b c a c b
d b d b c c

a c b c d a
```

```
b c c d d b
c c da d c
d c a b d d

a d c c a b
b d d d a c
c d a a a d
d d b b a a

a a d c b c
b a a d b d
c a b a b a
d a c b b b
```

Thus, a total of 32 codewords are produced.

There will be given a description of an exemplary application of the above code set generating method to a waveform modulator on a multicarrier forward link.

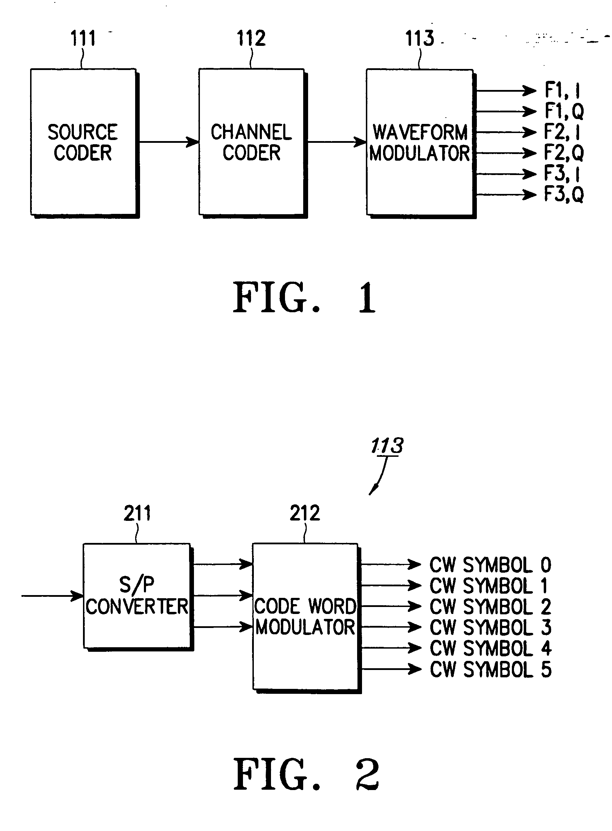

FIG. 1 is a block diagram of a transmitter on a forward link in a mobile communications system. Referring to FIG. 1, a source coder 111 encodes input data, and a channel coder 112 channel-encodes the data received from the source coder 111 and spreads the channel-encoded data. A waveform modulator 113 converts the spread data received from the channel coder 112 to codewords taken from a predetermined code set. The present invention is related to the waveform modulator 113 of FIG. 1.

FIG. 2 is a block diagram of the waveform modulator 113 shown in FIG. 1. Referring to FIG. 2, a serial-to-parallel converter 211 converts the data received from the channel coder 112 to parallel data, and a codeword modulator 212 maps the parallel data to corresponding codewords in a predetermined method. The codeword modulator 212 is shown in FIG. 2 to modulate input three bits to six codeword symbols F1I, F1Q, F2I, F2Q, F3I, and F3Q.

The waveform modulator 113 constituted as shown in FIG. 2 can map N-bit input data to an M-symbol output codeword. In this case, the codeword modulator 212 should convert the N-bit input data to the M-symbol codeword.

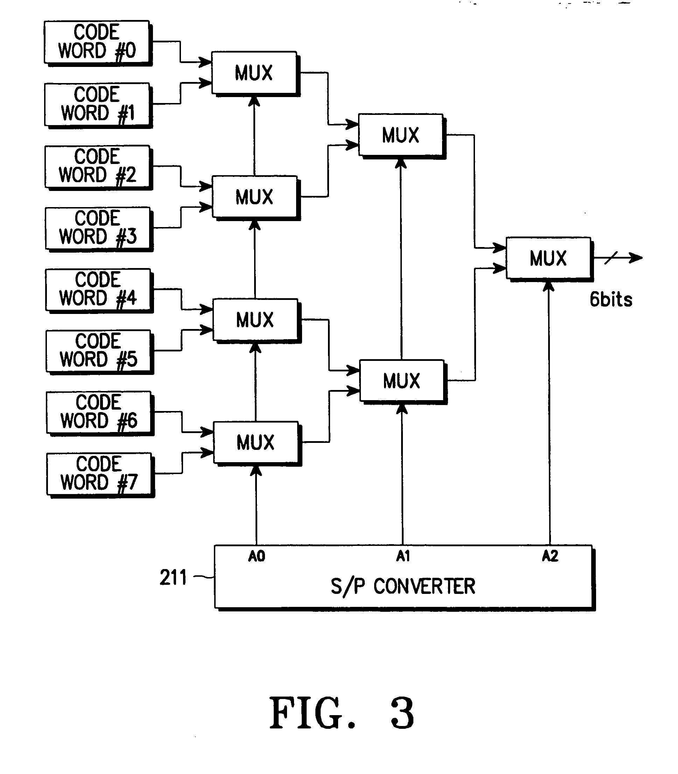

FIG. 3 is a detailed block diagram of the codeword modulator 212 of FIG. 2 realized in hardware. In the codeword modulator 212, three-bit input data is converted to a codeword with six symbols selected from eight codewords.

Referring to FIG. 3, the serial-to-parallel converter 211 converts input data to three-bit data. The codeword modulator 212 includes eight codewords #0-#7, and multiplexers MUX1-MUX7 for selecting a corresponding codeword from the eight codewords according to the three bits A0-A2 received from the serial-to-parallel converter 211.

The above method can be adapted to output an M-symbolt codeword for the N-bit input data.

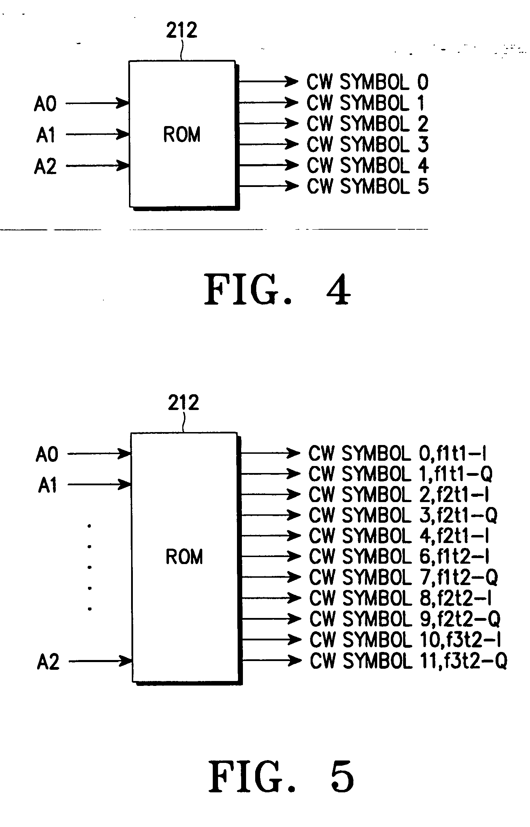

FIG. 4 is a view of a ROM used as the waveform modulator 113, for outputting a six-symbol codeword for three-bit input data A0-A2. If a codeword mapping table is stored in the ROM of FIG. 4, the N-bit data can be converted to the M-symbol codeword.

Various code sets can be generated depending on dmin and frequency diversity requirements. These code sets can be applied to a waveform modulator on a multicarrier forward link, such as a forward link modulator in a CDMA cellular system, PCS, or IMT-2000, thereby achieving coding gains and frequency diversity at the same time.

Use of codesets designed by the method of the present invention in transmitting data on a multicarrier forward link with three frequency channels and I and Q phase channels enables frequency diversity to be efficiently achieved. Since transmission channels can be used without the need for distinguishing frequencies and phase channels in the frequency diversity scheme, data transmission efficiency is increased. Furthermore, it is possible to set an appropriate ratio of a data transmission rate to frequency diversity. Therefore, channel coding gain requirements in other parts of a system can be reduced by means of a modulator using the above codesets, and a waveform modulator can be realized, which has a high coding rate with maximum frequency diversity and dmin.

The concept of the above method for generating codesets regardless of frequencies and phases can be applied to generation of multi-symbol block codes.

When there are three frequency channels and two phase channels, the six channels are basically assigned to one symbol. The multi-symbol block code scheme refers to assigning symbols to a total of 12 channels derived from three frequency channels, two phase channels, and two time slots. For 12 channels, code sets can be designed in which the distance between codewords is set to be large in consideration of frequency diversity. With these multi-symbol block codes, frequency multiplexing, time multiplexing, and coding gains can be achieved all together.

In the method of generating codeword symbols using frequency, phase, and time, the entire channels are

$$[f1\text{-}I \quad f1\text{-}Q \quad f2\text{-}I \quad f2\text{-}Q \quad f3\text{-}I \quad f3\text{-}Q$$

$$f1\text{-}I \quad f1\text{-}Q \quad f1\text{-}I \quad f2\text{-}Q \quad f3\text{-}I \quad f3\text{-}Q]$$

Codewords are constructed for the above channels in consideration of frequency multiplexing and dmin. For 12 channels, dmin=2, and frequency diversity $\geq 2$, the number of available codewords is $2^{10}$. If dmin is increased according to coding gain requirement, 10 or less symbol bits can be transmitted but the distance between codewords increases, facilitating demodulation.

A description of generating a code set for the 12 channels will be omitted because the code set generating method can be inferred from the afore-described examples.

FIG. 5 is a view showing a ROM used as a modulator in which data is block-encoded for three frequency channels, two phase channels, and two time channels which are used together. The codeword modulator 212 of FIG. 5 generates 12 output codeword symbols. Here, f1t1-I represents a codeword symbol transmitted in frequency f1, time slot t1, and phase channel I, and f3t2-Q represents a codeword symbol transmitted in frequency f3, time slot t2, and phase channel Q.

The codeword modulator of FIG. 5 is applicable to a communications system using a plurality of frequency channels, phase channels, or time channels, like a CDMA cellular system, PCS, and IMT-2000.

Application of data encoding and modulation together to a transmission system in the embodiment of the present invention increases the effects of frequency diversity in an environment of fading related with frequencies, and allows dynamic data encoding and modulation in any case between the extremes of no multiplexing with a high data transmission rate and multiplexing to every frequency channel with a low data transmission rate. In addition, since a plurality of phase channels and frequency channels are used together, a demodulation efficiency in a receiver is increased.

In the preferred embodiment of the present invention as described above, system capacity and power use efficiency as well as encoding and modulation efficiency are increased by dynamically applying data encoding and modulation to a transmission/reception system using a plurality of frequencies and phase channels in accordance with characteristics of the frequencies and phase channels.

While the present invention has been described in detail with reference to the specific embodiment, it is a mere exemplary application. Thus, it is to be clearly understood that many variations can be made by anyone skilled in the art within the scope of the present invention.

**Claims**

1. A code set generating method for a mobile communications system having Nf frequency channels and Np phase channels, comprising the steps of:

   calculating a code length Nc by Nf x Np;
   setting a minimum distance Nd between codewords in a code set and frequency diversity Nfd, and detecting code sets according to Nc, Nd, and Nfd; and
   selecting a code set having a Hamming distance distribution among code words which minimizes demodulation errors from the detected code sets, and storing the code set in a code set table.

2. A code set generating method for a mobile communications system having Nf frequency channels and Np phase channels and tn time slots, comprising the steps of:

   calculating a code length Nc by Nf x Np x tn;
   setting a minimum distance Nd between codewords in a code set and frequency diversity Nfd, and detecting code sets according to Nc, Nd, and Nfd; and
   selecting a code set having a Hamming distance distribution among code words which minimizes demodulation errors from the detected code sets, and storing the code set in a code set table.

3. A frequency diversity data transmitting method for a mobile communications system having a code set table for storing codewords as long as the product of the numbers of frequency channels and phase channels, wherein the codewords have a Hamming distance distribution among them which minimizes demodulation errors, comprising the steps of:

encoding source data to be transmitted;
channel-encoding the encoded source data;
converting the channel-encoded data to parallel data;
address-mapping the parallel data in the code set table, selecting a corresponding codeword, and modulating the waveform of the selected codeword; and
transmitting the waveform-modulated codeword on channels as many as the product of the numbers of frequency channels and phase channels.

4. A frequency diversity data transmitting method for a mobile communications system having a code set table for storing codewords as long as the product of the numbers of frequency channels, phase channels, and designated time slots, wherein the codewords have a Hamming distance distribution among them which minimizes demodulation errors, comprising the steps of:

encoding source data to be transmitted;
channel-encoding the encoded source data;
converting the channel-encoded data to parallel data;
address-mapping the parallel data in the code set table, selecting a corresponding codeword, and modulating the waveform of the selected codeword; and
transmitting the waveform-modulated codeword on channels as many as the product of the numbers of frequency channels, phase channels, and designated time slots.

5. A code set generating device for a mobile communications system having Nf frequency channels and Np phase channels, comprising:

means for calculating a code length Nc by Nf x Np;
means for setting a minimum distance Nd between codewords in a code set and frequency diversity Nfd, and detecting code sets according to Nc, Nd, and Nfd; and
means for selecting a code set having a Hamming distance distribution among code words which minimizes demodulation errors from the detected code sets, and storing the code set in a code set table.

6. A code set generating device for a mobile communications system having Nf frequency channels and Np phase channels and tn time slots, comprising:

means for calculating a code length Nc by Nf x Np x tn;
means for setting a minimum distance Nd between codewords in a code set and frequency diversity Nfd, and detecting code sets according to Nc, Nd, and Nfd; and
means for selecting a code set having a Hamming distance distribution among code words which minimizes demodulation errors from the detected code sets, and storing the code set in a code set table.

7. A frequency diversity transmitter for a mobile communications system, comprising:

a source coder (111) for encoding transmission data;
a channel coder (112) for channel-encoding the output of the source coder;
a waveform modulator (113) having a code set table for mapping the channel encoded data to corresponding code words referring to the code set table wherein the code set table comprises code words as long as the product of the numbers of frequency channels and phase channels, and wherein the code words have a Hamming distance distribution among them which minimizes demodulation errors; and
a transmitting portion for transmitting a codeword received from the waveform modulator on a plurality of channels.

8. The transmitter of claim 7, wherein the waveform modulator comprises:

a serial-to-parallel converter (211) for converting the channel-encoded data to parallel data; and
a codeword modulator (212) having the code set table for address-mapping the parallel data and selecting corresponding codewords.

9. A frequency diversity transmitter for a mobile communications system, comprising:

a source coder (111) for encoding transmission data;
a channel coder (112) for channel-encoding the output of the source coder;
a waveform modulator (113) having a code set table for mapping the channel encoded data to corresponding code words referring to the code set table wherein the code set table comprises code words as long as the product of the numbers of frequency channels and phase channels and time slots, and wherein the code words have a Hamming distance distribution among them which minimizes demodulation errors; and
a transmitting portion for transmitting a codeword received from the waveform modulator on a plurality of channels.

**10.** The transmitter of claim 9, wherein the waveform modulator comprises:

a serial-to-parallel converter (211) for converting the channel-encoded data to parallel data; and
a codeword modulator (212) having the code set table for address-mapping the parallel data and selecting corresponding codewords.


**Patentansprüche**

**1.** Verfahren zum Erzeugen eines Codesatzes für ein Mobilkommunikationssystem mit Nf Frequenzkanälen und Np Phasenkanälen, das die folgenden Schritte umfasst:

Berechnen einer Codelänge Nc mittels Nf x Np;
Festlegen eines minimalen Abstandes Nd zwischen Codewörtern in einem Codesatz und von Frequenz-Diversity Nfd sowie Erfassen von Codesätzen entsprechend Nc, Nd und Nfd; und
Auswählen eines Codesatzes mit einer Hamming-Abstandsverteilung zwischen CodeWörtern, durch die Demodulationsfehler auf ein Minimum verringert werden, aus den erfassten Codesätzen und Speichern des Codesatzes in einer Codesatz-Tabelle.

**2.** Verfahren zum Erzeugen eines Codesatzes für ein Mobilkommunikationssystem mit Nf Frequenzkanälen und Np Phasenkanälen sowie tn Zeitschlitzen, das die folgenden Schritte umfasst:

Berechnen einer Codelänge Nc mittels Nf x Np x tn;
Festlegen eines minimalen Abstandes Nd zwischen Codewörtern in einem Codesatz und von Frequenz-Diversity Nfd sowie Erfassen von Codesätzen entsprechend Nc, Nd und Nfd; und
Auswählen eines Codesatzes mit einer Hamming-Abstandsverteilung zwischen CodeWörtern, durch die Demodulationsfehler auf ein Minimum verringert werden, aus den erfassten Codesätzen und Speichern des Codesatzes in einer Codesatz-Tabelle.

**3.** Verfahren zum Senden von Daten mit Frequenz-Diversity für ein Mobilkommunikationssystem, das eine Codesatz-Tabelle zum Speichern von Codewörtern aufweist, die so lang sind wie das Produkt der Anzahl von Frequenzkanälen und der Anzahl von Phasenkanälen, wobei die Codewörter eine Hamming-Abstandsverteilung untereinander haben, durch die Demodulationsfehler auf ein Minimum verringert werden, und das Verfahren die folgenden Schritte umfasst:

Codieren zu sendender Quellendaten;
Kanalcodieren der codierten Quellendaten;
Umwandeln der kanalcodierten Daten in parallele Daten;
Adresszuordnung der parallelen Daten in der Codesatz-Tabelle, Auswählen eines entsprechenden Codeworts und Modulieren der Wellenform des ausgewählten Codeworts; und
Senden des wellenformmodulierten Codeworts auf Kanälen, deren Anzahl dem Produkt der Anzahl von Frequenzkanälen und der Anzahl von Phasenkanälen entspricht.

**4.** Verfahren zum Senden von Daten mit Frequenz-Diversity für ein Mobilkommunikationssystem, das eine Codesatz-Tabelle zum Speichern von Codewörtern aufweist, die so lang sind wie das Produkt der Anzahl von Frequenzkanälen, der Anzahl von Phasenkanälen und der Anzahl vorgegebener Zeitschlitze, wobei die Codewörter eine Hamming-Abstandsverteilung untereinander haben, durch die Demodulationsfehler auf ein Minimum verringert werden, wobei das Verfahren die folgenden Schritte umfasst:

Codieren zu sendender Quellendaten;

Kanalcodieren der codierten Quellendaten;
Umwandeln der kanalcodierten Daten in parallele Daten;
Adresszuordnung der parallelen Daten in der Codesatz-Tabelle, Auswählen eines entsprechenden Codeworts und Modulieren der Wellenform des ausgewählten Codeworts; und
Senden des wellenformmodulierten Codeworts auf Kanälen, deren Anzahl dem Produkt der Anzahl von Frequenzkanälen, der Anzahl von Phasenkanälen und der Anzahl vorgegebener Zeitschlitze entspricht.

5. Vorrichtung zum Erzeugen eines Codesatzes für ein Mobilkommunikationssystem mit Nf Frequenzkanälen und Np Phasenkanälen, die umfasst:

eine Einrichtung zum Berechnen einer Codelänge Nc mittels Nf x Np;
eine Einrichtung zum Festlegen eines minimalen Abstandes Nd zwischen Codewörtern in einem Codesatz und von Frequenz-Diversity Nfd sowie zum Erfassen von Codesätzen entsprechend Nc, Nd und Nfd; und
eine Einrichtung zum Auswählen eines Codesatzes mit einer Hamming-Abstandsverteilung unter Codewörtern, durch die Demodulationsfehler auf ein Minimum verringert werden, aus den erfassten Codesätzen, und zum Speichern des Codesatzes in einer Codesatz-Tabelle.

6. Vorrichtung zum Erzeugen eines Codesatzes für ein Mobilkommunikationssystem mit Nf Frequenzkanälen und Np Phasenkanälen sowie tn Zeitschlitzen, die umfasst:

eine Einrichtung zum Berechnen einer Codelänge Nc mittels Nf x Np x tn;
eine Einrichtung zum Festlegen eines minimalen Abstandes Nd zwischen Codewörtern in einem Codesatz und von Frequenz-Diversity Nfd, und Erfassen von Codesätzen entsprechend Nc, Nd und Nfd; und
eine Einrichtung zum Auswählen eines Codesatzes mit einer Hamming-Abstandsverteilung unter Codewörtern, durch die Demodulationsfehler auf ein Minimum verringert werden, aus den erfassten Codesätzen und zum Speichern des Codesatzes in einer Codesatz-Tabelle.

7. Frequenz-Diversity-Sendevorrichtung für ein Mobilkommunikationssystem, die umfasst:

eine Quellen-Codiereinrichtung (111) zum Codieren von Sendedaten;
eine Kanal-Codiereinrichtung (112) zum Kanalcodieren des Ausgangs der Quellen-Codiereinrichtung;
einen Wellenform-Modulator (113) mit einer Codesatz-Tabelle zum Zuordnen der kanalcodierten Daten zu entsprechenden Codewörtern unter Bezugnahme auf die Codesatz-Tabelle, wobei die Codesatz-Tabelle Codewörter umfasst, die so lang sind wie das Produkt der Anzahl von Frequenzkanälen und der Anzahl von Phasenkanälen, wobei die Codewörter eine Hamming-Abstandsverteilung untereinander haben, durch die Demodulationsfehler auf ein Minimum verringert werden; und
einen Sendeabschnitt zum Senden eines von dem Wellenform-Modulator empfangenen Codeworts auf einer Vielzahl von Kanälen.

8. Sendevorrichtung nach Anspruch 7, wobei der Wellenformmodulator umfasst:

einen Seriell-Parallel-Wandler (211) zum Umwandeln der kanalcodierten Daten in parallele Daten; und
einen Codewort-Modulator (212) mit der Codesatz-Tabelle für Adresszuordnung der parallelen Daten und Auswählen entsprechender Codewörter.

9. Frequenz-Diversity-Sendevorrichtung für ein Mobilkommunikationssystem, die umfasst:

eine Quellen-Codiereinrichtung (111) zum Codieren von Sendedaten;
eine Kanal-Codiereinrichtung (112) zum Kanalcodieren des Ausgangs der Quellen-Codiereinrichtung;
einen Wellenform-Modulator (113) mit einer Codesatz-Tabelle zum Zuordnen der kanalcodierten Daten zu entsprechenden Codewörtern unter Bezugnahme auf die Codesatz-Tabelle, wobei die Codesatz-Tabelle Codewörter umfasst, die so lang sind wie das Produkt der Anzahl von Frequenzkanälen und der Anzahl von Phasenkanälen sowie der Anzahl von Zeitschlitzen, und die Codewörter eine Hamming-Abstandsverteilung untereinander haben, durch die Demodulationsfehler auf ein Minimum verringert werden; und
einen Sendeabschnitt zum Senden eines von dem Wellenform-Modulator empfangenen Codeworts auf einer Vielzahl von Kanälen.

10. Sendevorrichtung nach Anspruch 9, wobei der Wellenform-Modulator umfasst:

einen Seriell-Parallel-Wandler (211) zum Umwandeln der kanalcodierten Daten in parallele Daten; und
einen Codewort-Modulator (212) mit der Codesatz-Tabelle für Adresszuordnung der parallelen Daten und Auswählen entsprechender Codewörter.

**Revendications**

1. Procédé de génération de jeux de codes pour un système de communications mobiles ayant Nf canaux de fréquence
   et Np canaux de phase, comprenant les étapes qui consistent :

   à calculer une longueur de code Nc par Nf x Np ;
   à établir une distance minimale Nd entre des mots de code dans un jeu de codes et une diversité de fréquence
   Nfd, et à détecter des jeux de codes conformément à Nc, Nd et Nfd ; et
   à sélectionner un jeu de codes ayant une distribution de distance de Hamming entre des mots de codes qui
   minimise des erreurs de démodulation à partir des jeux de codes détectés, et à stocker le jeu de codes dans
   une table de jeux de codes.

2. Procédé de génération de jeux de codes pour un système de communications mobiles ayant Nf canaux de fréquence
   et Np canaux de phase et des créneaux temporels tn, comprenant les étapes qui consistent :

   à calculer une longueur de code Nc par Nf x Np x tn ;
   à établir une distance minimale Nd entre des mots de code dans un jeu de codes et une diversité de fréquence
   Nfd, et à détecter des jeux de codes conformément à Nc, Nd et Nfd ; et
   à sélectionner un jeu de codes ayant une distribution de distance de Hamming entre des mots de codes qui
   minimise des erreurs de démodulation à partir des jeux de codes détectés, et à stocker le jeu de codes dans
   une table de jeux de codes.

3. Procédé de transmission de données à diversité de fréquence pour un système de communications mobiles ayant
   une table de jeux de codes destinée à stocker des mots de code de longueur égale au produit des nombres de
   canaux de fréquence et de canaux de phase, dans lequel les mots de code ont une distribution de distance de
   Hamming entre eux qui minimise les erreurs de démodulation, comprenant les étapes qui consistent :

   à coder des données de source devant être transmises ;
   à coder par canal les données de source codées ;
   à convertir les données codées par canal en données parallèles,;
   à appliquer un adressage aux données parallèles dans la table de jeux de codes, à sélectionner un mot de
   code correspondant et à moduler la forme d'onde du mot de code sélectionné ; et
   à transmettre le mot de code modulé en longueur d'onde sur des canaux aussi nombreux que le produit des
   nombres de canaux de fréquence et des canaux de phase.

4. Procédé de transmission de données à diversité de fréquence pour un système de communications mobiles ayant
   une table de jeux de codes destinée à stocker des mots de codes de longueur égale au produit des nombres de
   canaux de fréquence, de canaux de phase et de créneaux temporels désignés, dans lequel les mots de codes ont
   une distribution de distance de Hamming entre eux qui minimise les erreurs de démodulation, comprenant les étapes
   qui consistent :

   à coder des données de source devant être transmises ;
   à coder en canaux les données de source codées ;
   à convertir les données codées par canaux en données parallèles ;
   à appliquer un adressage aux données parallèles dans la table de jeux de codes, à sélectionner un mot de
   code correspondant et à moduler la forme d'onde du mot de code sélectionné ; et
   à transmettre le mot de code modulé en forme d'onde sur des canaux aussi nombreux que le produit des
   nombres de canaux de fréquence, des canaux de phase et des créneaux temporels désignés.

5. Dispositif de génération de jeux de codes pour un système de communications mobiles ayant Nf canaux de fréquence
   et Np canaux de phase, comportant :

   un moyen destiné à calculer une longueur de code Nc par Nf x Np ;

un moyen destiné à établir une distance minimale Nd entre des mots de codes dans un jeu de codes et une diversité de fréquence Nfd, et à détecter des jeux de codes conformément à Nc, Nd et Nfd ; et

un moyen destiné à sélectionner un jeu de codes ayant une distribution de distance de Hamming entre des mots de codes qui minimise les erreurs de démodulation à partir des jeux de codes détectés, et à stocker le jeu de codes dans une table de jeux de codes.

**6.** Dispositif de génération de jeux de codes pour un système de communications mobiles ayant Nf canaux de fréquence et Np canaux de phase et tn créneaux temporels, comportant :

un moyen destiné à calculer une longueur de code Nc par Nf x Np x tn ;

un moyen destiné à établir une distance minimale Nd entre des mots de codes dans un jeu de codes et une diversité de fréquence Nfd, et à détecter des jeux de codes conformément à Nc, Nd et Nfd ; et

un moyen destiné à sélectionner un jeu de codes ayant une distribution de distance de Hamming entre des mots de codes qui minimise les erreurs de démodulation à partir des jeux de codes détectés, et à stocker le jeu de codes dans une table de jeux de codes.

**7.** Emetteur à diversité de fréquence pour un système de communications mobiles, comportant :

un codeur (111) de source destiné à coder des données d'émission ;

un codeur (112) de canaux destiné à coder par canaux le signal de sortie du codeur de source ;

un modulateur (113) de forme d'onde ayant une table de jeux de codes pour appliquer les données codées par canaux à des mots de codes correspondants en se référant à la table de jeux de codes, dans lequel la table de jeux de codes comporte des mots de codes de longueur égale au produit des nombres des canaux de fréquence et des canaux de phase, et dans lequel les mots de codes ont une distribution de distance de Hamming entre eux qui minimise les erreurs de démodulation ; et

une partie d'émission destinée à émettre un mot de code reçu du modulateur de forme d'onde sur de multiples canaux.

**8.** Emetteur selon la revendication 7, dans lequel le modulateur de forme d'onde comporte :

un convertisseur série-en-parallèle (211) destiné à convertir les données codées par canaux en données parallèles ; et

un modulateur (212) de mots de codes comportant la table de jeux de codes pour une application d'adressage aux données parallèles et une sélection de mots de codes correspondants.

**9.** Emetteur à diversité de fréquence pour un système de communications mobiles, comportant :

un codeur de source (111) destiné à coder des données d'émission ;

un codeur (112) de canaux destiné à coder par canaux le signal de sortie du codeur de source ;

un modulateur (113) de forme d'onde comportant une table de jeux de codes pour appliquer les données codées par canaux à des mots de codes correspondants en référence à la table de jeux de codes, dans lequel la table de jeux de codes comporte des mots de codes de longueur égale au produit des nombres de canaux de fréquence, de canaux de phase et de créneaux temporels, et dans lequel les mots de codes ont une distribution de distance de Hamming entre eux qui minimise les erreurs de démodulation ; et

une partie d'émission destinée à émettre un mot de code reçu du modulateur de forme d'onde sur plusieurs canaux.

**10.** Emetteur selon la revendication 9, dans lequel le modulateur de forme d'onde comporte :

un convertisseur série-en-parallèle (211) destiné à convertir les données codées par canaux en données parallèles ; et

un modulateur (212) de mots de codes comportant la table de jeux de codes pour une application d'adressage aux données parallèles et une sélection de mots de codes correspondants.

FIG. 1

FIG. 2

FIG. 3

## FIG. 4

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0544463 A